(19) **Europäisches Patentamt / European Patent Office / Office européen des brevets**

(11) **EP 4 077 225 B1**

(12) **FASCICULE DE BREVET EUROPEEN**

(45) Date de publication et mention de la délivrance du brevet:
**22.07.2026 Bulletin 2026/30**

(21) Numéro de dépôt: **20833810.3**

(22) Date de dépôt: **17.12.2020**

(51) Classification Internationale des Brevets (IPC):
*C02F 3/00* (2023.01)  *C02F 1/52* (2023.01)
*C02F 3/30* (2023.01)

(52) Classification Coopérative des Brevets (CPC):
**C02F 3/006; C02F 3/308;** C02F 1/5209;
C02F 1/5245; C02F 2209/006; C02F 2209/08;
C02F 2209/14; C02F 2209/15; C02F 2209/16;
C02F 2209/18; C02F 2209/20; C02F 2209/21;
C02F 2209/22; C02F 2209/40; C02F 2301/04;
(Cont.)

(86) Numéro de dépôt international:
**PCT/EP2020/086674**

(87) Numéro de publication internationale:
**WO 2021/122919 (24.06.2021 Gazette 2021/25)**

(54) **INSTALLATION DE TRAITEMENT D'EAUX RÉSIDUAIRES ET PROCÉDÉ ASSOCIÉ DE RÉGULATION DU FONCTIONNEMENT DE L'INSTALLATION**

**ABWASSERBEHANDLUNGSANLAGE UND ZUGEHÖRIGES VERFAHREN ZUR STEUERUNG DES BETRIEBS DER ANLAGE**

**WASTE WATER TREATMENT FACILITY AND ASSOCIATED METHOD FOR CONTROLLING THE OPERATION OF THE FACILITY**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **17.12.2019 FR 1914671**

(43) Date de publication de la demande:
**26.10.2022 Bulletin 2022/43**

(73) Titulaire: **SUEZ International**
**92800 Puteaux (FR)**

(72) Inventeurs:
• **PETITPAIN PERRIN, Françoise**
**92040 Paris La Défense CEDEX (FR)**
• **DAUNAY, Alexis**
**92040 Paris La Défense CEDEX (FR)**
• **DELAHAYE, Mathieu**
**92040 Paris La Défense CEDEX (FR)**

(74) Mandataire: **Lavoix**
**2, place d'Estienne d'Orves**
**75441 Paris Cedex 09 (FR)**

(56) Documents cités:
CN-A- 105 621 792      JP-A- 2016 168 571
US-A1- 2019 127 246

(52) Classification Coopérative des Brevets (CPC):
(Cont.)C02F 2301/043; Y02E 50/30; Y02W 10/10

**Description**

**Domaine technique**

La présente invention se rapporte au traitement des eaux résiduaires, telles que des eaux résiduaires urbaines ou industrielles.

L'invention a pour objet une installation de traitement des eaux résiduaires et un procédé de régulation du fonctionnement d'une telle installation.

**Etat de la technique antérieure**

On connaît dans l'état de la technique antérieure, des installations de traitement des eaux résiduaires comprenant une unité de traitement primaire produisant des boues primaires issues de matières en suspension présentes dans les eaux résiduaires. Ces boues primaires sont ensuite injectées dans un digesteur dans lequel du biogaz valorisable est produit à partir des boues primaires.

L'effluent de l'unité de traitement duquel ont été retirées, au moins en partie, les matières en suspension des eaux résiduaires, est injecté dans une unité de traitement biologique dans laquelle sont éliminés du carbone organique et/ou de l'azote et/ou du phosphore présent dans l'effluent. Après avoir transité dans l'unité de traitement biologique, l'effluent doit répondre aux normes environnementales en matière de rejets.

Il est connu de l'état de la technique antérieure que les débits d'eaux résiduaires et la charge en polluants des eaux résiduaires en entrée d'une usine de traitement varient au cours d'une journée et d'un jour à l'autre.

S'ajoute à cela l'impossibilité de prévoir précisément à long terme l'évolution de la quantité et de la qualité des eaux résiduaires destinées à alimenter l'installation de traitement en raison, par exemple, de l'accroissement de la population, du raccordement de nouveaux réseaux à l'usine de traitement, de l'évolution de la production d'eaux résiduaires d'usines existantes ou de l'implantation de nouvelles usines. Aussi, les unités des installations de traitement de l'état de la technique antérieure sont généralement surdimensionnées ou sont plus rarement sous-dimensionnées. Dans les deux cas, afin que les rejets de l'installation de traitement satisfassent aux normes en matière environnementale, les installations de l'état de l'art engendrent des surcoûts financiers, une surconsommation énergétique et une sous-valorisation énergétique des matières fermentescibles lorsque le débit et/ou la charge des eaux résiduaires fluctuent.

Dans les installations de l'état de l'art, lors de l'augmentation du débit et/ou de la charge au-delà de la capacité de fonctionnement prévue ou lors de la diminution du débit et/ou de la charge en deçà de la capacité de fonctionnement prévue, le respect des normes environnementales en matière de rejets, conditionné par l'élimination du carbone organique et/ou de l'azote et/ou du phosphore, nécessite :

- une augmentation des coûts financiers du traitement biologique, par exemple à travers l'apport de carbone externe, tel que du méthanol, dans l'unité de traitement biologique, et/ou
- une augmentation de la consommation énergétique engendrée par le traitement biologique, par exemple à travers l'aération du surplus de carbone organique dans l'unité de traitement biologique, et/ou
- une diminution de la valorisation énergétique du traitement primaire, par exemple à travers la digestion des boues primaires.

On connait dans l'état de l'art des installations telles que décrites dans le document WO2014/102686, dans le document Assman et al, Drinking Water Engineering and Science, 10, (61-68), 2017, dans le document Qibin Wang, Qiuwen Chen, Jinfeng Ma, Qiang Xu et al., « Application Of Real-Time Control Strategy To Improve Nitrogen Removal In Wastewater Treatment », International Conference on Hydroinformatics HIC 2014, New York City USA, et dans le document H. Long, E. Broeders, H.W.H. Menkveld, Nijhuis Water Technology, « Applying real-time pollution control to reduce chemical costs and energy usage for DAF », Weftec conference, 2016.

D'autres installations de traitement d'eaux résiduaires sont décrites dans JP 2016/168571, US 2019/127246 et CN 105 621 792.

Un but de l'invention est notamment de :

- S"affranchir de l'ajout de carbone externe dans l'unité de traitement biologique, et/ou
- de permettre une valorisation énergétique optimale, en continu, des eaux résiduaires, et/ou
- de minimiser, en continu et/ou en temps réel, les coûts financiers engendrés par le traitement des eaux résiduaires, et/ou
- de minimiser, en continu et/ou en temps réel, la consommation énergétique engendrée par le traitement des eaux résiduaires.

**Présentation de l'invention**

A cet effet, il est proposé une installation de traitement d'eaux résiduaires telle que décrite dans la revendication 1.

De préférence, alimenter l'UTB avec une eau comprenant une quantité de carbone organique égale à la quantité de carbone organique nécessaire pour éliminer l'azote et/ou le phosphore contenus dans l'eau à traiter par l'UTP équivaut à alimenter l'UTB avec une eau dont le ratio C/N, et/ou respectivement le ratio C/P, entre la quantité de carbone organique contenu dans de l'eau à traiter par l'UTB et la quantité d'azote total ou partiel contenue dans de l'eau à traiter par l'UTB, et/ou respectivement la quantité de phosphore total ou partiel contenu dans de l'eau à traiter par l'UTB, est égal à la première consigne, et/ou respectivement à la deuxième consigne.

L'UTB est agencée pour produire des boues biologiques, dites boues secondaires, et l'UTP est agencée pour produire des boues primaires.

Selon l'invention, le terme « configurée » lorsqu'il se rapporte à l'unité de commande peut également être entendu comme programmée et/ou agencée.

Selon l'invention :

- la fonction f(C,N) peut être telle qu'elle permet de renseigner, en temps réel, quant à l'évolution de la quantité de carbone organique contenue dans de l'eau à traiter par l'UTB et/ou dans de l'eau en traitement dans l'UTB relativement à l'évolution de la quantité d'azote total ou partiel contenue dans de l'eau à traiter par l'UTB et/ou dans de l'eau en traitement dans l'UTB, et/ou
- la fonction f(C,P) peut être telle qu'elle permet de renseigner, en temps réel, quant à l'évolution de la quantité de carbone organique contenu dans de l'eau à traiter par l'UTB et/ou dans de l'eau en traitement dans l'UTB relativement à l'évolution de quantité de phosphore total ou partiel contenu dans de l'eau à traiter par l'UTB et/ou dans de l'eau en traitement dans l'UTB.

L'eau à traiter par l'UTB peut comprendre une partie de l'effluent de l'UTP, cela peut être le cas lorsque l'eau à traiter contourne partiellement l'UTP ou lorsque des boues primaires alimentent l'UTB et n'alimentent pas l'UTP. L'eau à traiter par l'UTB peut comprendre uniquement l'effluent de l'UTP. L'eau à traiter par l'UTB peut comprendre l'effluent de l'UTP et de la matière supplémentaire. La matière supplémentaire peut être liquide ou solide. La matière supplémentaire peut provenir de l'installation. La matière supplémentaire peut avoir été générée et/ou transformée par l'installation. La matière supplémentaire peut être extérieure à l'installation.

L'eau à traiter par l'UTB et/ou par l'UTP est une eau qui est destinée à alimenter directement ou indirectement l'UTB. L'eau à traiter par l'UTB et/ou par l'UTP est une eau qui peut avoir transitée préalablement dans une ou plusieurs autres unités de l'installation.

Selon l'invention, l'unité de commande peut être configurée pour commander le ou les paramètres de fonctionnement de l'UTP de sorte que la quantité de carbone organique contenue dans de l'eau à traiter par l'UTB et/ou dans de l'eau en traitement dans l'UTB soit maintenue le plus proche possible d'une quantité optimale de carbone organique contenue dans de l'eau à traiter par l'UTB et/ou dans de l'eau en traitement dans l'UTB, dit quantité de carbone organique optimale.

Le maintien de la quantité de carbone organique contenue dans l'eau à traiter par l'UTB et/ou en cours de traitement dans l'UTB le plus proche possible de la quantité de carbone organique optimale permet qu'une quantité d'azote total ou partiel et/ou une quantité de phosphore total ou partiel contenues dans un effluent de l'UTB puisse être, à tout instant, conforme aux normes environnementales de rejets.

La quantité de carbone organique optimale est fonction du type d'UTB que contient l'installation et de la capacité de traitement de l'UTB. La quantité de carbone organique optimale est, en outre, fonction du type d'UTP que contient l'installation et de la capacité de traitement de l'UTP.

La quantité de carbone organique optimale est, en outre, fonction :

- de la quantité d'azote total ou partiel contenue dans de l'eau à traiter par l'UTB et/ou dans de l'eau en traitement dans l'UTB, et/ou
- de la quantité de phosphore total ou partiel contenue dans de l'eau à traiter par l'UTB et/ou dans de l'eau en traitement dans l'UTB.

Selon l'invention, l'unité de commande peut, en outre, être configurée pour commander un ou des paramètres de fonctionnement de l'UTP et/ou un ou des paramètres de fonctionnement d'une ou d'autres unités de l'installation comme par exemple un taux de recirculation des boues biologiques dans l'UTB.

Un avantage de l'invention est de s'affranchir de l'ajout de carbone externe dans l'UTB en régulant, en temps réel par commande du ou des paramètres de fonctionnement de l'UTP, la quantité de carbone organique contenu dans l'eau alimentant l'UTB en fonction de la quantité d'azote total ou partiel et/ou de la quantité de phosphore total ou partiel contenues dans l'eau alimentant l'UTB, et/ou dans de l'eau en traitement dans l'UTB.

Selon l'invention, l'installation peut comprendre une unité de nitrification. L'unité de nitrification est agencée pour produire des nitrates et/ou des nitrites à partir d'azote total ou partiel contenu dans de l'eau alimentant l'unité de nitrification.

Selon l'invention, l'UTB peut être agencée pour éliminer, au moins en partie, l'azote et/ou le phosphore contenus dans de l'eau à traiter par l'UTB.

Selon l'invention :

- la fonction f(C,N) et/ou la première consigne peuvent être telles que la minimisation de l'écart entre ladite fonction f(C,N) et la première consigne par la commande du ou des paramètres de fonctionnement de l'UTP par l'unité de commande permette à la quantité d'azote total ou partiel contenu dans l'effluent de l'UTB d'être, à tout instant, conforme aux normes environnementales de rejets, et/ou
- la fonction f(C,P) et/ou la deuxième consigne peuvent être telles que la minimisation de l'écart entre ladite fonction f(C,P) et la deuxième consigne par la commande du ou des paramètres de fonctionnement de l'UTP par l'unité de commande permette à la quantité de phosphore total ou partiel contenu dans l'effluent de l'UTB d'être, à tout instant, conforme aux normes environnementales de rejets.

Un avantage de l'invention est de ne pas suralimenter l'UTB en carbone organique en régulant, en temps réel, l'alimentation de l'UTB en carbone organique de telle sorte que l'UTB soit alimentée avec une eau comprenant une quantité de carbone organique égale à la quantité de carbone organique nécessaire pour éliminer l'azote et/ou le phosphore contenus dans ladite eau. La quantité de carbone organique supplémentaire peut être valorisée.

Autrement dit, un avantage de l'invention est de réguler, en temps réel, l'alimentation de l'UTB en carbone organique de telle sorte que l'UTB soit alimentée avec une eau comprenant une quantité de carbone organique égale à la quantité de carbone organique nécessaire, ou optimale, pour éliminer l'azote et/ou le phosphore contenu dans ladite eau.

Suralimenter l'UTB en carbone organique équivaut à alimenter l'UTB avec une quantité de carbone organique supérieure à la quantité de carbone organique nécessaire, ou optimale, pour éliminer l'azote et/ou le phosphore contenu dans ladite eau.

Dès lors, suralimenter l'UTB en carbone organique équivaut donc à alimenter l'"UTB avec une eau dont le ratio C/N, et/ou respectivement le ratio C/P, entre la quantité de carbone organique contenue dans de l'eau à traiter par l'UTB et la quantité d'azote total ou partiel contenue dans de l'eau à traiter par l'UTB, et/ou respectivement la quantité de phosphore total ou partiel contenu dans de l'eau à traiter par l'UTB, est supérieur à la première consigne et/ou respectivement à la deuxième consigne.

Réguler, en temps réel, l'alimentation de l'UTB en carbone organique de telle sorte que l'UTB soit alimentée avec une eau comprenant une quantité de carbone organique égale à la quantité de carbone organique nécessaire, ou optimale, pour éliminer l'azote et/ou le phosphore contenu dans ladite eau équivaut à réguler l'alimentation de l'UTB en carbone organique de sorte que le ratio C/N, et/ou respectivement le ratio C/P, entre la quantité de carbone organique contenue dans de l'eau à traiter par l'UTB et la quantité d'azote total ou partiel contenue dans de l'eau à traiter par l'UTB, et/ou respectivement la quantité de phosphore total ou partiel contenue dans de l'eau à traiter par l'UTB, soit égal à la première consigne, et/ou respectivement à la deuxième consigne.

Aussi, un avantage de l'invention est de réguler, en temps réel, l'alimentation de l'UTB en carbone organique de sorte que, lorsque la quantité de carbone organique contenue dans de l'eau à traiter par l'UTB présente un ratio, C/N et/ou respectivement un ratio C/P, supérieur à la première consigne et/ou respectivement à la deuxième consigne, l'UTB soit alimentée avec une eau dont la quantité de carbone organique présente un ratio C/N, et/ou respectivement un ratio C/P, égal à la première consigne, et/ou respectivement à la deuxième consigne. La quantité de carbone organique supplémentaire peut être valorisée.

La quantité de carbone organique supplémentaire peut être valorisée par digestion dans un digesteur.

La quantité de carbone organique supplémentaire équivaut à la quantité de carbone organique supplémentaire, ou en excès, par rapport à la quantité de carbone organique nécessaire, ou optimale, pour éliminer l'azote et/ou le phosphore contenu dans l'eau à traiter par l'UTB.

Selon l'invention :

- la fonction f(C,N) peut être égale ou proportionnelle à un ratio, dit C/N, entre la quantité de carbone organique contenu dans de l'eau à traiter par l'UTB et/ou dans de l'eau en traitement dans l'UTB et la quantité d'azote total ou partiel contenue dans de l'eau à traiter par l'UTB et/ou dans de l'eau en traitement dans l'UTB, et/ou
- la fonction f(C,P) peut être égale ou proportionnelle à un ratio, dit C/P, entre la quantité de carbone organique contenu dans de l'eau à traiter par l'UTB et/ou dans de l'eau en traitement dans l'UTB et la quantité de phosphore total ou partiel contenu dans de l'eau à traiter par l'UTB et/ou dans de l'eau en traitement dans l'UTB.

L'unité de commande est configurée pour commander le ou les paramètres de fonctionnement de l'UTP proportionnellement à une différence entre le ratio C/N et la première consigne et/ou respectivement à une différence entre le ratio C/P et la deuxième consigne.

L'unité de commande est configurée pour rétroagir sur et/ou modifier le ou les paramètres de fonctionnement de l'UTP proportionnellement à la différence entre le ratio C/N et la première consigne et/ou respectivement à la différence entre le ratio C/P et la deuxième consigne.

L'installation comprend au moins deux capteurs agencés pour mesurer dans de l'eau à traiter par l'UTB et/ou dans de l'eau en traitement dans l'UTB :

- la quantité de carbone organique et/ou la quantité d'azote total ou partiel et/ou la quantité de phosphore total ou partiel, et/ou
- un ou des paramètres chimiques à partir desquels sont calculés et/ou dé- terminés la quantité de carbone organique et/ou la quantité d'azote total ou partiel et/ou la quantité de phosphore total ou partiel, et/ou
- une quantité d'oxygène.

Selon l'invention, l'oxygène peut comprendre de l'oxygène dissous. L'oxygène peut être de l'oxygène dissous.

Le ou les capteurs peuvent être agencés pour mesurer dans de l'eau à traiter par l'UTB et/ou dans de l'eau en traitement dans l'UTB :

- une quantité d'oxygène, et/ou
- un ou des paramètres chimiques à partir desquels sont calculés et/ou dé- terminés la quantité d'oxygène.

Le ou les capteurs peuvent être agencés pour mesurer, en outre, des paramètres physico-chimiques et/ou des paramètres physiques à partir desquels sont calculés et/ou déterminés la quantité de carbone organique et/ou la quantité d'azote total ou partiel et/ou la quantité de phosphore total ou partiel et/ou la quantité d'oxygène.

Le ou les capteurs peuvent être disposés en aval de l'UTP, et en amont de l'UTB, par rapport à une circulation de l'effluent depuis l'UTP vers l'UTB.

Le ou les capteurs peuvent être disposés dans un moyen de convoyage de l'effluent depuis l'UTP vers l'UTB. Le ou les capteurs peuvent être disposés dans l'eau en traitement dans l'UTB, notamment dans un circuit de recirculation des boues biologiques dans l'UTB.

Par exemple, le ou les capteurs peuvent être disposés dans une partie du circuit de recirculation des boues biologiques dans l'UTB située en entrée de l'UTB.

L'installation peut comprendre, en outre :

- un ou des circuits de dérivation de l'UTP et/ou un ou des circuits de dérivation d'une ou plusieurs autres unités de l'installation de sorte que de l'eau à traiter par l'UTP et/ou de l'eau ou des eaux à traiter par la ou les autres unités de l'installation et/ou des eaux résiduaires alimentent l'UTB, et/ou
- un dispositif agencé pour faire recirculer l'eau en traitement dans l'UTB, et/ou
- un dispositif agencé pour alimenter l'UTP en boues primaires produites par l'UTP,
- un dispositif agencé pour alimenter l'UTP en boues digérées par une unité de digestion de l'installation, et/ou
- un dispositif agencé pour alimenter l'UTP en boues biologiques produites par l''UTB, et/ou
- un dispositif agencé pour alimenter l'UTP en mélange de boues biologiques produites par l'UTB et de boues primaires produites par l'UTP, et/ou
- un dispositif agencé pour alimenter l'UTP en un mélange de boues digérées et de boues primaires produites par l'UTP, et/ou
- un dispositif agencé pour alimenter l'UTP en un mélange de boues digérées et de boues biologiques produites par l'UTB, et/ou
- un dispositif agencé pour alimenter l'UTB et/ou l'UTP en carbone organique produit sur l'installation, le carbone organique produit par l'installation pouvant provenir de la fermentation des boues primaires, et/ou
- un dispositif agencé pour injecter et/ou doser un ou des agents de coagulation et/ou un ou des agents de floculation et/ou un ou des additifs colmatant/filtrant :

  • dans l'UTP, et/ou
  • dans l'UTB, et/ou
  • dans les boues primaires produites par l'UTP, et/ou
  • dans les boues biologiques produites par l'UTB, et/ou
  • dans le mélange de boues biologiques produites par l'UTB et de boues primaires produites par l'UTP, et/ou
  • dans les boues ayant été digérées par l'unité de digestion, et/ou
  • dans un mélange de boues digérées et de boues primaires produites par l'UTP, et/ou
  • dans un mélange de boues digérées et de boues biologiques produites par l'UTB, et/ou
  • dans le carbone organique produit par l'installation, le carbone organique produit par l'installation pouvant provenir de la fermentation des boues primaires, et/ou
  • du carbone externe alimentant l'UTB.

L'installation peut comprendre, en outre, un digesteur.

Le digesteur peut être agencé pour produire du biogaz et du digestat à partir :

- de boues produites par l'UTP et/ou par l'UTB, et/ou
- d'eau à traiter par l'UTP et/ou par l'UTB.

De préférence, le digesteur est agencé pour produire du biogaz et du digestat à partir d'une quantité de carbone organique contenue dans de l'eau à traiter par l'UTP qui est en excès par rapport à la quantité de carbone organique nécessaire, ou optimale, pour éliminer l'azote et/ou le phosphore contenu dans l'eau à traiter par l'UTB.

Les boues digérées par l'unité de digestion peuvent être des boues biologiques et/ou des boues primaires.

Selon l'invention, le ou les paramètres de fonctionnement de l'UTP peuvent comprendre :

- un débit d'eau à traiter par l'UTP, et/ou
- une ou des quantités injectées et/ou un ou des débits d'injection en agent(s) de coagulation et/ou en agent(s) de floculation et/ou en additif(s) colmatant/filtrant :

  • dans l'UTP, et/ou
  • dans les boues primaires produites par l'UTP, et/ou
  • dans les boues biologiques produites par l'UTB, et/ou
  • dans le mélange de boues biologiques produites par l'UTB et de boues primaires produites par l'UTP, et/ou

- dans les boues ayant été digérées par l'unité de digestion, et/ou
- dans un mélange de boues digérées et de boues primaires produites par l'UTP, et/ou
- dans un mélange de boues digérées et de boues biologiques produites par l'UTB, et/ou
- dans le carbone organique produit par l'installation, le carbone organique produit par l'installation pouvant provenir de la fermentation des boues primaires, et/ou

- un débit d'alimentation de l'UTP et/ou de l'UTB en boues primaires produites par l'UTP, et/ou
- un débit d'alimentation de l'UTP en boues digérées par une unité de digestion de l'installation, et/ou
- un débit d'alimentation de l'UTP en boues biologiques produites par l'UTB, et/ou
- un débit d'alimentation de l'UTP en mélange de boues biologiques produites par l'UTB et de boues primaires produites par l'UTP, et/ou
- un débit d'alimentation de l'UTP en un mélange de boues digérées et de boues primaires produites par l'UTP, et/ou
- un débit d'alimentation de l'UTP en un mélange de boues digérées et de boues biologiques produites par l'UTB, et/ou
- un débit d'alimentation de l'UTP en carbone organique produit sur l'installation, le carbone organique produit par l'installation pouvant provenir de la fermentation des boues primaires.

Selon des modes de réalisation hors de l'invention, le ou les paramètres de fonctionnement de l'UTP peuvent comprendre :

- un débit d'eau à traiter par l'UTB, et/ou
- un débit de recirculation de l'eau en traitement dans l'UTB, et/ou
- un ou des débits d'eau à traiter circulant dans le ou les circuits de dérivation, et/ou
- une ou des quantités injectées et/ou un ou des débits d'injection en agent(s) de coagulation et/ou en agent(s) de floculation et/ou en additif(s) colmatant/-filtrant dans l'UTB, et/ou
- un débit d'alimentation de l'UTB en carbone organique produit sur l'installation, le carbone organique produit par l'installation pouvant provenir de la fermentation des boues primaires.

Le débit d'eau à traiter par l'UTB mentionné dans le paragraphe qui précède et/ou le débit d'eau à traiter par l'UTP peut être le débit d'eau alimentant, ou débit d'alimentation, de l'UTB et/ou respectivement le débit d'eau alimentant, ou débit d'alimentation, de l'UTP.

Il est également proposé un dispositif de régulation du fonctionnement d'une installation de traitement d'eaux résiduaires.

Les moyens de commande de l'installation peuvent être agencés pour commander, en outre, le ou des paramètres de fonctionnement de l'UTB et/ou un ou des paramètres de fonctionnement d'une ou d'autres unités de l'installation.

Les moyens de commande de l'installation peuvent commander le un ou des paramètres de fonctionnement de l'UTP via l'unité de commande de l'installation de traitement d'eaux résiduaires définie précédemment. De manière alternative, les moyens de commande de l'installation peuvent comprendre l'unité de commande de l'installation de traitement d'eaux résiduaires définie précédemment.

L'unité de traitement du dispositif de régulation peut être destinée à être connectée à l'unité de commande de l'installation de traitement d'eaux résiduaires définie précédemment.

L'unité de traitement du dispositif de régulation peut être agencée pour émettre des instructions de commande à destination des moyens de commande de l'installation et/ou de l'unité de commande de l'installation de traitement d'eaux résiduaires.

L'unité de traitement du dispositif de régulation peut être configurée de manière identique à l'unité de commande de l'installation de traitement d'eaux résiduaires définie précédemment.

Une caractéristique isolée ou un ensemble de caractéristiques de l'unité de commande de l'installation de traitement d'eaux telle que définie précédemment sont transposables à l'unité de traitement du dispositif de régulation.

L'unité de traitement du dispositif de régulation peut être configurée pour commander un ou des paramètres de fonctionnement d'un digesteur agencé pour produire du biogaz et du digestat à partir d'une quantité de carbone organique contenue dans de l'eau à traiter par l'UTP qui est en excès par rapport à la quantité de carbone organique nécessaire, ou optimale, pour éliminer l'azote et/ou le phosphore contenu dans l'eau à traiter par l'UTB.

Il est également proposé une utilisation du dispositif de régulation selon l'invention pour la régulation du fonctionnement de l'installation de traitement d'eaux résiduaires selon l'invention.

Selon l'invention, il est également proposé un procédé de régulation du fonctionnement d'une installation de traitement d'eaux résiduaires tel que décrit dans les revendications 5 à 7.

Les variables de la fonction f(C,N) dont peuvent comprendre une quantité d'oxygène contenue dans de l'eau à traiter par l'UTB et/ou dans de l'eau en traitement dans l'UTB.

L'étape de commande du procédé peut comprendre une commande d'un ou de plusieurs paramètres de fonctionnement de l'UTP et/ou de l'UTB et/ou un ou des paramètres de fonctionnement d'une ou d'autres unités de l'installation.

L'étape de commande du ou des paramètres de fonctionnement peut être mise en œuvre par l'unité de commande de l'installation de traitement d'eaux résiduaires et/ou par des moyens de commande de l'installation de l'installation de traitement d'eaux résiduaires et/ou par l'unité de traitement du dispositif de régulation du fonctionnement d'une installation de traitement d'eaux résiduaires.

L'étape de commande peut comprendre une émission d'instructions de commande, par l'unité de traitement du dispositif de régulation d'une installation de traitement d'eaux résiduaires, à destination des moyens de commande de l'installation de traitement d'eaux résiduaires et/ou de l'unité de commande de l'installation de traitement d'eaux résiduaires.

La commande du ou des paramètres de fonctionnement de l'UTP est proportionnelle à une différence entre le ratio C/N et la première consigne et/ou respectivement à une différence entre le ratio C/P est la deuxième consigne.

L'étape de commande comprend une rétroaction et/ou une modification du ou des paramètres de fonctionnement de l'UTP proportionnellement à la différence entre le ratio C/N et la première consigne et/ou respectivement à la différence entre le ratio C/P est la deuxième consigne.

Le procédé de régulation du fonctionnement d'une installation de traitement d'eaux résiduaires comprend une mesure dans de l'eau à traiter par l'UTB et/ou dans de l'eau en traitement dans l'UTB, par plusieurs capteurs :

- de la quantité de carbone organique et/ou de la quantité d'azote total ou partiel et/ou de la quantité de phosphore total ou partiel, et/ou
- d'un ou de plusieurs paramètres chimiques à partir desquels sont calculés et/ou déterminés la quantité de carbone organique et/ou la quantité d'azote total ou partiel et/ou la quantité de phosphore total ou partiel.

Le procédé de régulation comprend une mesure, par les capteurs, dans de l'eau à traiter par l'UTB et/ou dans de l'eau en traitement dans l'UTB :

- d'une quantité d'oxygène, et/ou
- d'un ou des paramètres chimiques à partir desquels sont calculés et/ou déterminés la quantité d'oxygène

Le procédé peut comprendre, en outre, une mesure, par le ou les capteurs, de paramètres physico-chimiques et/ou de paramètres physiques à partir desquels sont calculés et/ou déterminés la quantité de carbone organique et/ou la quantité d'azote total ou partiel et/ou la quantité de phosphore total ou partiel et/ou la quantité d'oxygène

L'étape de mesure peut être réalisée en aval de l'UTP, et en amont de l'UTB, par rapport à une circulation de l'effluent depuis l'UTP vers l'UTB, et/ou dans l'eau en traitement dans l'UTB.

Le procédé de régulation du fonctionnement d'une installation de traitement d'eaux résiduaires peut comprendre un ou plusieurs des paramètres de fonctionnement tels que définis précédemment.

Selon l'invention, le traitement des eaux résiduaires peut comprendre :

- une production d'un effluent, par une Unité de Traitement Primaire (UTP), déchargé, au moins en partie, de matières en suspension contenues dans de l'eau à traiter par l'UTP,
- une élimination, par une Unité de Traitement Biologique (UTB), d'au moins une partie de carbone organique contenue dans de l'eau à traiter par l'UTB, et/ou dans l'eau en traitement dans l'UTB,
- une élimination, par l'UTB, d'au moins une partie de nitrates et/ou de phosphates contenus dans l'eau à traiter par l'UTB.

Le traitement par l'UTB des eaux résiduaires peut comprendre une étape de nitrification au cours de laquelle des nitrates et/ou des nitrites sont produits à partir de l'azote total ou partiel. L'étape de nitrification peut com- prendre une production de nitrates et/ou des nitrites dans une unité de nitrification à partir d'ammoniaque et/ou d'ions ammonium dans de l'eau alimentant l'unité de nitrification.

Le traitement des eaux résiduaires peut comprendre, en outre, une production, par l'UTP, de boues primaires et une production, par l'UTB, de boues biologiques, dites boues secondaires.

Le traitement des eaux résiduaires peut comprendre :

- un prétraitement, par unité de prétraitement, des eaux résiduaires pour fournir un effluent de prétraitement compatible avec les besoins d'une ou d'autres unités de l'installation et/ou avec les normes de rejet, et/ou
- une digestion, par un digesteur, pour produire du biogaz et du digestat à partir :
- de boues produites par l'UTP et/ou par l'UTB, et/ou
- d'eau à traiter par l'UTP et/ou par l'UTB.

Le prétraitement peut comprendre une ou plusieurs des étapes suivantes :

- un relevage, par une unité ou un poste de relevage permettant de relever, par exemple par pompage, des objets circulants dans l'installation, à titre d'exemple non limitatif des eaux, boues et/ou digestat, et/ou
- un dégrillage et/ou un tamisage, par une unité de dégrillage et/ou une unité de tamisage, pour retirer de l'eau à traiter, par exemple à l'aide d'une grille, des objets insolubles et/ou macroscopiques tels que des branches ou des morceaux de plastique, et/ou

- un dessablage, par une unité de dessablage, pour retirer, par exemple par décantation, le sable contenu dans de l'eau à traiter, et/ou
- un dégraissage, par une unité de dégraissage, pour retirer, par exemple par séparation chimique et/ou décantation, des huiles contenues dans de l'eau à traiter.

Il est également proposé un appareil de traitement de données comprenant des moyens de mettre en œuvre le procédé selon l'invention.

Il est également proposé un programme d'ordinateur comprenant des instructions qui, lorsque le programme est exécuté par un ordinateur, conduisent celui-ci à mettre en œuvre le procédé selon l'invention.

Il est également proposé un support d'enregistrement, lisible par ordinateur, comprenant des instructions qui, lorsqu'elles sont exécutées par un ordinateur, conduisent celui-ci à mettre en œuvre le procédé selon l'invention.

**Description des figures**

D'autres avantages et particularités de l'invention apparaîtront à la lecture de la description détaillée de mises en œuvre et de modes de réalisation nullement limitatifs, et des dessins annexés suivants :

[Fig. 1] la figure 1 est une représentation schématique de l'unité de traitement primaire et de l'unité de traitement biologique d'une installation de traitement des eaux usées selon l'invention,
[Fig. 2] la figure 2 est une représentation schématique des unités fonctionnelles d'une installation de traitement des eaux usées selon l'invention.

**Description des modes de réalisation**

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

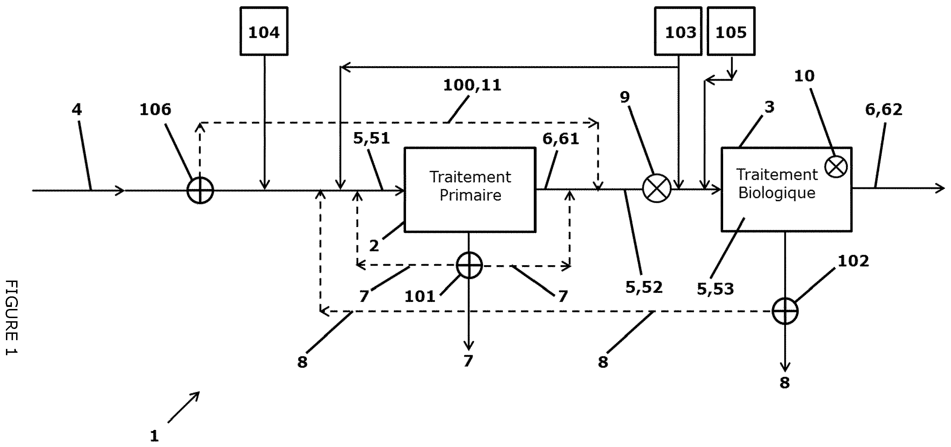

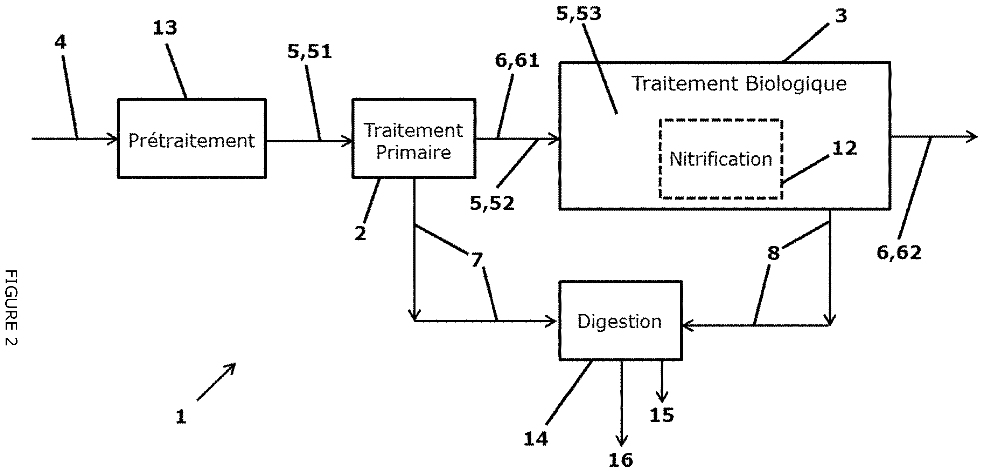

En référence aux figures 1 et 2, l'installation de traitement 1 des eaux résiduaires 4 vise à traiter des eaux résiduaires 4 qui comprennent du carbone organique, noté C. Les eaux résiduaires 4 comprennent également de la pollution azotée, notée N, contenant, entre autres, de l'azote organique provenant des déjections humaines et animales, des rejets des industries agro-alimentaires, de l'activité agricole et de l'azote ammoniacal provenant des rejets industriels et des eaux usées domestiques.

En référence à la FIGURE 1, il est illustré l'Unité de Traitement Primaire (UTP) 2 et l'Unité de Traitement Biologique (UTB) 3 d'une installation de traitement 1 d'eaux résiduaires 4. L'UTP 2 produit un effluent 6,61 déchargé, au moins en partie, de matières en suspension contenues dans de l'eau à traiter 5,51 par l'UTP 2 et produit des boues primaires 7. L'UTB 3 élimine au moins en partie, du carbone organique contenu dans de l'eau à traiter 5,52 par l'UTB 3, élimine, au moins en partie, par dénitrification biologique, des nitrates et/ou nitrites contenus dans de l'eau à traiter 5,52 par l'UTB 3 et/ou dans l'eau en traitement 5,53 dans l'UTB 3 et produit un effluent 6,62 conforme aux normes environnementales et des boues biologiques 8.

L'installation de traitement 1 comprend une unité de commande (non représentée) configurée pour déterminer une fonction, dite f(C,N), dont les variables comprennent une quantité de carbone organique contenue dans de l'eau à traiter 5,52 par l'UTB 3 et/ou dans l'eau en traitement 5,53 dans l'UTB 3 et une quantité d'azote N total ou partiel contenue dans de l'eau à traiter 5,52 par l'UTB 3 et/ou dans l'eau en traitement 5,53 dans l'UTB 3.

Selon le cas, la fonction f(C,N) est déterminée à partir :

- de données stockées ou transmises par un dispositif de stockage de données local ou par un serveur distant ou par un dispositif de mesure présent sur l'installation 1 et qui mesure en temps réel la quantité de carbone organique C et de la quantité d'azote N total ou partiel, ou
- de la quantité de carbone organique C et la quantité d'azote N total ou partiel mesurées, de manière directe ou indirecte, dans de l'eau à traiter 5,52 par l'UTB 3 et/ou dans l'eau en traitement 5,53 dans l'UTB 3 par un ou plusieurs capteurs 9,10 de l'installation 1.

La mesure indirecte comprend, par exemple, la mesure d'un ou de plusieurs paramètres physico-chimiques à partir desquels sont calculés et/ou déterminés la quantité de carbone organique C et la quantité d'azote N total ou partiel.

Lorsque la fonction f(C,N) est déterminée à partir de données stockées ou transmises, ces données peuvent provenir, par exemple, de campagnes de mesures réalisées sur l'installation 1, par exemple une ou plusieurs fois par an, au moyen d'un dispositif comprenant un ou plusieurs capteurs pour mesurer, de manière directe ou indirecte, la quantité de carbone organique C et la quantité d'azote N total.

L'unité de commande est également configurée pour commander un ou des paramètres de fonctionnement de l'UTP 2 et/ou un ou des paramètres de fonctionnement de l'UTB 3 pour minimiser un écart entre la fonction f(C,N) et une première consigne. La minimisation de cet écart vise à réguler, au cours du temps, la quantité de carbone organique C contenue dans l'eau à traiter 5,52 dans l'UTB 3.

La fonction f(C,N) a pour but de rendre compte, à tout instant, de l'évolution de la quantité de carbone organique C contenue dans de l'eau à traiter 5,52 par l'UTB 3 et/ou dans l'eau en traitement 5,53 dans l'UTB 3 relativement à la quantité d'azote N total ou partiel contenue dans de l'eau à traiter 5,52 par l'UTB 3 et/ou dans l'eau en traitement 5,53 dans l'UTB 3.

La valeur de consigne est établie, entre autres, en fonction de l'installation de traitement 1, c'est-à-dire en fonction du type et de la taille des unités, du type de traitement et/ou de fonctionnement des unités, du débit moyen d'alimentation et du type de pollution que doivent théoriquement contenir les eaux résiduaires 4 alimentant l'installation 1.

La première consigne correspond à la valeur optimale de la fonction f(C,N) pour laquelle la quantité de carbone organique C contenue dans l'eau 5,52 alimentant l'UTB 3 et/ou dans l'eau en traitement 5,53 dans l'UTB 3 est optimale et satisfait aux besoins liés au processus de dénitrification biologique mis en œuvre dans l'UTB 3 de telle sorte que la quantité d'azote N et la quantité de carbone organique C contenues dans l'effluent 6,62 de l'UTB 3 satisfassent aux normes de rejets environnementales. En effet, une quantité trop faible de carbone organique C dans l'eau alimentant 5,52 l'"UTB 3 et/ou dans l'eau en traitement 5,53 dans l'UTB 3 engendrerait une quantité d'azote N contenue dans l'effluent 6,62 de l'UTB 3 qui serait supérieure aux normes environnementales et une quantité trop élevée de carbone organique C dans l'eau alimentant 5,52 l'UTB 3 et/ou dans l'eau en traitement 5,53 dans l'UTB 3 engendrerait soit une quantité de carbone organique C contenue dans l'effluent 6,62 de l'UTB 3 qui serait supérieure aux normes environnementales si le réglage de l'aération n'est pas modifié soit une surconsommation de l'énergie nécessaire à l'aération.

La première consigne est déterminée, entre autres, par rapport à la quantité de carbone organique C nécessaire à l'UTB 3 pour procéder à la dénitrification de l'eau en traitement 5,53 par l'UTB 3. La première consigne est telle que la quantité de carbone organique C optimale contenue dans l'eau à traiter 5,52 dans l'UTB 3 permet à l'effluent 6,62 de l'UTB 3 d'être conforme aux normes environnementales.

L'installation de traitement 1 comprend :

- un circuit de dérivation 100 de l'UTP 2 qui permet d'alimenter l'UTB 3 en eau à traiter 5,51 par l'UTP 2 au moyen d'un dispositif 106, par exemple une pompe de relevage 106,
- un dispositif 101, par exemple une pompe de relevage 101, qui permet d'alimenter l'UTP 2 en boues primaires 7 produites par l'UTP 2,
- un dispositif 101 qui permet d'alimenter l'UTB 3 en boues primaires 7 produites par l'UTP 2,
- un dispositif 102, par exemple une pompe de relevage 102, qui permet d'alimenter l'UTP 2 en boues biologiques 8 produites par l'UTB 3,
- un dispositif 103, par exemple une pompe doseuse reliée à un réservoir, agencé pour alimenter l'UTB 3 et/ou l'UTP 2 en carbone organique produit par l'installation, le carbone produit par l'installation pouvant provenir de la fermentation des boues primaires,
- un dispositif 104, par exemple une pompe doseuse reliée à un réservoir, pour injecter et/ou doser un ou des agents colmatants, filtrants, lestants dans de l'eau à traiter 5,51 par l'UTP 2,
- un dispositif 105, par exemple une pompe doseuse reliée à un réservoir, agencé pour alimenter l'UTB 3 en nutriments externes ou produits par l'installation pouvant comprendre du carbone et/ou du carbone organique, par exemple en méthanol ou en acide phosphorique.

Le ou les paramètres de fonctionnement de l'UTP 2 comprennent :

- un débit d'eau à traiter 5,51 par l'UTP 2,
- un ou des débits d'eau à traiter 11 circulant dans le circuit de dérivation 100,
- une modification, par un dispositif d'injection 104,105 d'une ou de quantités injectées et/ou une modification d'un ou de débits d'injection en agent(s) colmatant(s), filtrant(s), lestant(s) de l'eau à traiter 5,51 par l'UTP 2,
- un débit d'alimentation de l'UTP 2 et/ou de l'UTB 3 en boues primaires 7 produites par l'UTP 2, et/ou
- un débit d'alimentation de l'UTP 2 en boues biologiques produites 8 par l'UTB 3,
- un débit d'alimentation de l'UTP 2 et/ou de l'UTP 3 en carbone organique produit par l'installation, le carbone produit par l'installation pouvant provenir de la fermentation des boues primaires.

Les débits sont contrôlés par des moyens connus de l'homme du métier comme par exemple un dispositif comprenant un débitmètre massique et une électrovanne proportionnelle.

Outre le traitement de l'azote, l'installation de traitement 1 des eaux résiduaires 4 peut également traiter des eaux résiduaires 4 comprenant, en outre, du phosphore, noté P, provenant des rejets industriels, de l'activité agricole et des eaux usées domestiques.

Dans ce cas, l'UTB 3 élimine, au moins en partie, par déphosphatation biologique des phosphates contenus dans de l'eau à traiter 5,52 par l'UTB 3.

L'unité de commande est, en outre, configurée pour déterminer une fonction f(C,P), dont les variables comprennent une quantité de carbone organique C contenue dans de l'eau à traiter 5,52 par l'UTB 3 et/ou dans l'eau en traitement 5, 53 dans l'UTB 3 et une quantité de phosphore P total ou partiel contenue dans de l'eau à traiter 5,52 par l'UTB 3.

Selon le cas, la fonction f(C,P) est déterminée à partir :

- de données stockées ou transmises par un dispositif de stockage de données local ou par un serveur distant ou par un dispositif de mesure présent sur l'installation 1 et qui mesure en temps réel la quantité de carbone organique C et de la quantité de phosphore P total ou partiel, ou
- de la quantité de carbone organique C et la quantité de phosphore P total ou partiel mesurées, de manière directe ou indirecte, dans de l'eau à traiter 5,52 par l'UTB 3 et/ou dans l'eau en traitement 5,53 par l'UTB 3 par un ou de plusieurs capteurs 9,10 de l'installation 1.

La mesure indirecte comprend, par exemple, la mesure d'un ou de plusieurs paramètres physico-chimiques à partir desquels sont calculés et/ou déterminés la quantité de carbone organique C et la quantité de phosphore total P total ou partiel.

Lorsque la fonction f(C,P) est déterminée à partir de données stockées ou transmises, ces données peuvent provenir, par exemple, de campagnes de mesures réalisées sur l'installation 1 à une certaine fréquence, par exemple une ou plusieurs fois par an, au moyen d'un dispositif comprenant un ou plusieurs capteurs pour mesurer, de manière directe ou indirecte, la quantité de carbone organique C et la quantité de phosphore P total ou partiel.

L'unité de commande est, en outre, configurée pour commander le ou des paramètres de fonctionnement de l'UTP 2 pour minimiser un écart entre la fonction f(C,P) et une deuxième consigne. La minimisation de l'écart en question vise à réguler, au cours du temps, la quantité de carbone organique C contenue dans de l'eau alimentant 5,52 l'UTB 3.

La fonction f(C,P) a pour but de rendre compte, à tout instant, de l'évolution de la quantité de carbone organique C contenue dans de l'eau à traiter 5,52 par l'UTB 3 et/ou dans l'eau en traitement 5,53 par l'UTB 3 relativement à la quantité de phosphore P total ou partiel contenue dans de l'eau à traiter 5,52 par l'UTB 3 et/ou dans l'eau en traitement 5,53 par l'UTB 3.

La deuxième consigne correspond à la valeur optimale de la fonction f(C,P) pour laquelle la quantité de carbone organique C contenue dans l'eau alimentant 5,52 l"UTB 3 et/ou dans l'eau en traitement 5,53 par l'UTB 3 est optimale et satisfait aux besoins liés au processus de déphosphatation biologique mis en œuvre dans l'UTB 3 de telle sorte que la quantité de phosphore et la quantité de carbone organique C contenues dans l'effluent 6,62 de l"UTB 3 satisfassent aux normes de rejets environnementales. La deuxième consigne est déterminée, entre autres, par rapport à la quantité de carbone organique C nécessaire à l'UTB 3 pour procéder à la déphosphatation biologique de l'eau en traitement 5,53 par l'UTB 3.

En effet, une quantité trop faible en carbone organique C dans l'eau 5,52 alimentant l'UTB 3 et/ou dans l'eau en traitement 5,53 par l'UTB 3 engendrerait une quantité de phosphore P contenue dans l'effluent 6,62 de l'UTB 3 qui serait supérieure aux normes environnementales et une quantité trop élevée en carbone organique C dans l'eau 5,52 alimentant l'UTB 3 et/ou dans l'eau en traitement 5,53 par l'UTB 3 engendrerait soit une quantité en carbone organique C contenue dans l'effluent 6,62 de l"UTB 3 qui serait supérieure aux normes environnementales si le réglage de l'aération n'est pas modifié soit une surconsommation de l'énergie nécessaire à l'aération.

La minimisation en temps réel de l'écart entre la fonction f(C,N) et la première consigne et la fonction f(C,P) et la deuxième consigne permet de contrôler en temps réel les apports en carbone organique C dans l'eau en traitement 5,53 dans l'UTB 3.

La minimisation en temps réel de l'écart entre la fonction f(C,N) et la première consigne et la fonction f(C,P) et la deuxième consigne a pour but d'adapter les besoins de l'UTB 3 en carbone organique C qui évoluent en fonction de la quantité en azote N total ou partiel contenue dans l'eau alimentant 5,52 l"UTB 3 et/ou dans l'eau en traitement 5,53 par l'UTB 3, de la quantité en phosphore P total ou partiel contenue dans l'eau alimentant 5,52 l'UTB 3 et/ou dans l'eau en traitement 5,53 par l'UTB 3 et de la quantité en carbone organique C contenu dans l'eau alimentant 5,52 l"UTB 3 et/ou dans l'eau en traitement 5,53 dans l'UTB 3.

La première et la deuxième consigne sont déterminées de sorte que la minimisation assure le maintien d'une quantité de carbone organique C optimale dans l'eau alimentant 5,52 l"UTB 3 et/ou dans l'eau en traitement 5,53 dans l'UTB 3 et permette que l'effluent 6,62 de l'UTB 3 soit conforme aux normes environnementales de rejets quant à la quantité de carbone organique C, d'azote total N et de phosphore total P qu'il contient. Autrement dit, la quantité de carbone organique C optimale, correspondant aux besoins en carbone organique C de l'UTB 3, est la quantité de carbone organique C nécessaire à l'UTB 3 pour procéder à la dénitrification et à la déphosphatation biologique de l'eau en traitement 5,53 par l'UTB 3.

A titre d'exemples non limitatifs, il est proposé trois exemples particuliers de régulation du fonctionnement d'une installation de traitement 1. Dans chacun des exemples, la fonction f(C,N) a été établie comme le ratio, dit C/N, de la quantité de carbone organique C et de la quantité d'azote N total ou partiel dans l'eau alimentant 5,52 l'UTB 3 et la fonction f(C,P) a été établie comme le ratio, dit C/P, de la quantité de carbone organique C et de la quantité de phosphore P total ou partiel dans l'eau alimentant 5,52 l'UTB 3.

Dans les trois exemples qui suivent, le terme consigne doit être considéré comme une valeur de consigne, notée R, plus ou moins une valeur d'incertitude.

La consigne est dépassée quand la valeur du ratio C/N ou C/P est supérieure à R*, c'est-à-dire à la valeur de consigne R plus la valeur d'incertitude.

La consigne n'est pas atteinte quand la valeur du ratio C/N ou C/P est inférieure à R, c'est-à-dire à la valeur de consigne R moins la valeur d'incertitude.

Il est présenté un premier exemple de régulation du fonctionnement de l'installation de traitement 1 du carbone organique C et de l'azote N contenus dans des eaux usées 4.

Dans ce premier exemple, la Demande Chimique en Oxygène (DCO) et la concentration en azote, notée NH4, sont mesurées, en temps réel, dans l'eau à traiter 6,61 par l'UTB 3 respectivement par un UVmètre 9 couplé à une sonde MES et par une sonde spécifique à ions ammoniums 9 couplée à une sonde MES.

Un ratio C/N est calculé et comparé, en temps réel, à une valeur de consigne prédéterminée, notée $R_{C/N}$. La consigne $R_{C/N}$ renseigne sur la quantité de carbone organique C nécessaire à l'UTB 3 pour éliminer l'azote contenu dans l'eau alimentant 5,52 l'UTB 3 et/ou dans l'eau en traitement 5,53 dans l'UTB 3.

Le débit d'alimentation de l'UTP 2, noté DA, en eau à traiter 5,51 par l'UTP 2 est régulé en temps réel via une boucle de rétroaction visant à réduire l'écart entre le ratio C/N et la consigne $R_{C/N}$.

A cet effet, pour un débit d'alimentation donné $DA_n$, le débit d'alimentation DA en eau à traiter 5,51 par l'UTP 2 est commandé en temps réel, de telle sorte que :

- lorsque le ratio C/N calculé est inférieur à $R^-_{C/N}$, alors le débit d'alimentation DA est augmenté à un débit $DA_{n+1}$ qui est égal à $DA_{n+1} = DA_n + DA_{\Delta A}$ de sorte à pallier le déficit en carbone organique C observé et combler les besoins en carbone organique C pour la dénitrification,

- lorsque le ratio C/N calculé est supérieur à $R^+_{C/N}$, alors le débit d'alimentation DA est diminué à un débit $DA_{n+1}$ proportionnel à la valeur, $\Delta A$, de la différence entre le ratio C/N et $R^+_{C/N}$, $DA_{n+1}$ est égal à $DA_{n+1} = DA_n - DA_{\Delta A}$ de sorte à ne pas suralimenter l'UTB 3 en carbone organique C qui peut être valorisé, par exemple en produisant du biogaz dans un digesteur 14,

- lorsque le ratio C/N calculé est compris entre $R^+_{C/N}$ et $R^-_{C/N}$, alors le débit d'alimentation DA est maintenu constant.

Il est présenté un deuxième exemple de régulation du fonctionnement de l'installation de traitement 1 du carbone organique C, de l'azote N et du phosphore P contenus dans des eaux usées 4. La DCO, la concentration en ions ammonium NH4 et la concentration en ions phosphate, notée PO4, sont mesurées, en temps réel, dans l'eau à traiter 5,52 par l'UTB 3 respectivement par un UVmètre 9 couplé à une sonde MES, par une sonde spécifique à ions ammoniums 9 couplée à une sonde MES et par un analyseur de phosphates 9 couplé à une sonde MES.

Un ratio C/N est calculé et comparé, en temps réel, à la valeur de consigne $R_{C/N}$ et un ratio C/P est calculé et comparé, en temps réel, à une valeur de consigne prédéterminée, notée $R_{C/P}$. La consigne $R_{C/N}$ renseigne sur la quantité de carbone organique C nécessaire à l'UTB 3 pour éliminer l'azote contenu dans l'eau alimentant 5,52 l'UTB 3 et la consigne $R_{C/P}$ renseigne sur la quantité de carbone organique C nécessaire à l'UTB 3 pour éliminer le phosphore contenu dans l'eau alimentant 5,52 l'UTB 3.

Le débit d'alimentation DA en eau à traiter 5,51 par l'UTP 2 est régulé en temps réel via une boucle de rétroaction visant à réduire l'écart entre le ratio C/N et la consigne $R_{C/N}$ que défini dans le premier exemple ci-dessus. Dans le même temps, le débit d'injection, noté DI, par exemple en chlorure ferrique $FeCl_3$, dans de l'eau à traiter 5,51 par l'UTP 22 est régulé en temps réel via une boucle de rétroaction visant à réduire l'écart entre le ratio C/P et la consigne $R_{C/P}$.

A cet effet, il est déterminé, en temps réel, un taux de traitement, noté T, en chlorure ferrique dans l'eau à traiter 5,51 par l'UTP 2. Dès lors, pour un taux de traitement donné $T_n$, le taux de traitement T en chlorure ferrique dans l'eau à traiter 5,51 par l'UTP 2 est commandé en temps réel, de telle sorte que :

- lorsque le ratio C/P calculé est supérieur à $R^+_{C/P}$ et que la valeur de la différence entre le ratio C/P et la consigne $R_{C/P}$ est positive et égale à $+\Delta I$ et que le ratio C/N est égal à $R_{C/N}$, alors le taux de traitement T est diminué à un taux de traitement $T_{n+1}$ qui est égal à $T_{n+1} = T_n - T_{\Delta I}$ de sorte à ne pas sur consommer du chlorure ferrique et à traiter préférentiellement le phosphore par voie biologique dans l'UTB 3,

- lorsque le ratio C/P calculé est inférieur à $R^-_{C/P}$ et que la valeur de la différence entre le ratio C/P et la consigne $R_{C/P}$ est négative et égale à $-\Delta I$ et que le ration C/N est égal à $R_{C/N}$, alors le taux de traitement T est augmenté à un taux de traitement $T_{n+1}$ qui est égal à $T_{n+1} = T_n + T_{\Delta I}$ de sorte à diminuer la quantité de P à traiter dans l'UTB 3,

- lorsque le ratio C/P calculé est compris entre $R^+_{C/P}$ et $R^-_{C/P}$ et que la valeur de la différence entre le ratio C/N et la consigne $R_{C/N}$ est positive et égale à $\Delta A$, alors le taux de traitement T est augmenté à un taux de traitement $T_{n+1}$ qui est égal à $T_{n+1} = T_n + T_{\Delta A}$ de sorte à ne pas suralimenter l'UTB 3 en carbone organique C qui peut être valorisé, par exemple en produisant du biogaz dans un digesteur 14,

- lorsque le ratio C/P calculé est compris entre $R^+_{C/P}$ et $R^-_{C/P}$ et que la valeur de la différence entre le ratio C/N et la consigne Rc/n est négative et égale à $-\Delta A$, alors le taux de traitement T est diminué à un taux de traitement $T_{n+1}$ qui est égal à $T_{n+1} = T_n - T_{\Delta A}$ de sorte à

pallier le déficit en carbone organique C observé et combler les besoins en carbone organique C pour la dénitrification,

- lorsque la valeur de la différence entre le ratio C/P et la consigne $R_{C/P}$ est négative et égale à -$\Delta$I et que la valeur de la différence entre le ratio C/N et la consigne $R_{C/N}$ est négative et égale à -$\Delta$A, alors le taux de traitement T est inchangé t $T_{n+1}=T_n$,

- lorsque la valeur de la différence entre le ratio C/P et la consigne $R_{C/P}$ est positive et égale à $\Delta$I et que la valeur de la différence entre le ratio C/N et la consigne $R_{C/N}$ est positive et égale à $\Delta$A, alors le taux de traitement T est diminué à un taux de traitement $T_{n+1}$ et qui est égal à $T_{n+1}=T_n-T_{\Delta I}$ de sorte à ne pas suralimenter l'UTB 3 en carbone organique C qui peut être valorisé, par exemple en produisant du biogaz dans un digesteur 14,

- lorsque la valeur de la différence entre le ratio C/P et $R_{C/P}$ est négative et égale à -$\Delta$I et que la valeur de la différence entre le ratio C/N et $R_{C/N}$ est positive et égale à $\Delta$A, alors le taux de traitement T est augmenté à un taux de traitement $T_{n+1}$ proportionnel à $\Delta$A et -$\Delta$II et qui est égal à $T_{n+1}=T_n+T_{\Delta IA}$ pour diminuer la quantité de P à traiter dans l'UTB 3,

- lorsque la valeur de la différence entre le ratio C/P et la consigne $R_{C/P}$ est positive et égale à $\Delta$I et que la valeur de la différence entre le ratio C/N et la consigne $R_{C/N}$ est négative et égale à -$\Delta$A, alors le taux de traitement T est diminué à un taux de traitement $T_{n+1}$ et qui est égal à $T_{n+1}=T_n-T_{\Delta I}$ de sorte à pallier le déficit en carbone organique C observé et combler les besoins en carbone organique C pour la dénitrification.

Enfin, le débit d'injection DI en chlorure ferrique dans l'eau à traiter 5,51 par l'UTP 2 est déterminé à partir du taux de traitement T en chlorure ferrique précédemment déterminé selon de la formule suivante :
DI=T.DA/(1000.$P_{FeCl3}$·$\rho_{FeCl3}$.$M_{Fe}$.$M_{FeCl3}$.100), où $P_{FeCl3}$ est la pureté d'injection du chlorure de fer, $\rho_{FeCl3}$ est la masse volumique du chlorure de fer, $M_{Fe}$ la masse molaire du fer et $M_{FeCl}$ la Masse molaire du chlorure de fer.

Il est présenté un troisième exemple de régulation du fonctionnement de l'installation de traitement 1 du carbone organique C et de l'azote N dans des eaux usées 4.

La DCO et la concentration en ions ammonium NH4 sont mesurées, en temps réel, dans l'eau à traiter 5,52 par l'UTB 3 respectivement par un UVmètre 9 couplé à une sonde MES et par une sonde spécifique à ions ammoniums 9 couplée à une sonde MES.
Le ratio C/N est calculé et comparé, en temps réel, à la valeur de consigne prédéterminée, notée $R_{C/N}$.
Le débit d'alimentation en boues primaires 7 produites par l'UTP 2 dans l'eau à traiter 5,51 par l'UTP 2, également appelé débit de recirculation et noté DR, est régulé en temps réel via une boucle de rétroaction visant à réduire l'écart entre le ratio C/N et la consigne $R_{C/N}$.

A cet effet, pour un débit de recirculation donné DR, le débit de recirculation DR en boues primaires 7 dans l'eau à traiter 5,51 par l'UTP 2 est commandé en temps réel, de telle sorte que :

- lorsque le ratio C/N calculé est inférieur à $R^-_{C/N}$, alors le débit de recirculation DR est diminué à un débit $DR_{n+1}$ qui est égal à $DR_{n+1}=DR_n+DR_{\Delta A}$ de sorte à pallier le déficit en carbone organique C observé et combler les besoins en carbone organique C pour la dénitrification,

- lorsque le ratio C/N calculé est supérieur à $R^+_{C/N}$, alors le débit de recirculation DR est augmenté à un débit $DR_{n+1}$ qui est égal à $DR_{n+1}=DR_n-DR_{\Delta R}$ de sorte à ne pas suralimenter l'UTB 3 en carbone organique C qui peut être valorisé, par exemple en produisant du biogaz dans un digesteur 14,

- lorsque le ratio C/N calculé est compris entre $R^+_{C/N}$ et $R^-_{C/N}$, alors le débit de recirculation DR est maintenu constant.

Il est également proposé un dispositif (non représenté) de régulation du fonctionnement d'une installation 1 de traitement d'eaux résiduaires 4 comprenant un ou plusieurs capteurs et une unité de traitement. Le ou les capteurs et l'unité de traitement du dispositif de régulation sont agencés de manière identique au ou aux capteurs 9 et à l'unité de commande de l'installation de traitement 1 tels que définis ci-dessus. L'unité de traitement du dispositif de régulation est agencée pour être connectée à l'unité de commande, ou le cas échéant directement à de moyens de commande, de l'installation de traitement 1 d'eaux résiduaires 4.
L'unité de traitement du dispositif de régulation :

- émet les données mesurées par un ou des capteurs du dispositif de régulation à destination d'un dispositif de stockage de données local ou d'un serveur distant ou de l'unité de commande de l'installation de traitement 1, et/ou

- effectue les étapes et/ou les opérations de calcul et de détermination en lieu et place de celles effectuées par l'unité de commande de l'installation de traitement 1 telles que définies précédemment et émet des instructions de commande des paramètres de fonctionnement de l'installation 1 à destination de l'unité de commande, ou le cas échéant directement à de moyens de commande, de l'installation de traitement 1 des eaux usées 4.

Ainsi, dans des variantes combinables entre elles des modes de réalisation précédemment décrits :

- l'installation de traitement 1 comprend une unité de déphosphatation par voie chimique (non représentée) qui élimine, au moins en partie, des phosphates contenus dans de l'eau alimentant l'unité de déphosphatation, et/ou

- l'unité de commande est configurée pour déterminer la fonction f(C,N) dont les variables comprennent une quantité de carbone organique contenu dans de l'eau en traitement 5,53 dans l'UTB 3 la quantité d'azote N total ou partiel contenu dans de l'eau à traiter 5,52 par l'UTB 3 et/ou dans de l'eau en traitement 5,53 dans l'UTB 3, et/ou

- l'unité de commande est configurée pour déterminer la fonction f(C,P), dont les variables comprennent une quantité de carbone organique C contenu dans de l'eau en traitement 5,53 dans l'UTB 3 et la quantité de phosphore P total ou partiel contenu dans de l'eau à traiter 5,52 par l'UTB 3 et/ou dans de l'eau en traitement 5,53 dans l'UTB 3, et/ou

- le ou les capteurs 9,10 mesurent, de manière directe ou indirecte, la quantité de carbone organique C et/ou la quantité d'azote N total ou partiel et/ou la quantité de phosphore P total ou partiel dans de l'eau en traitement 5,53 dans l'UTB 3, et/ou

- en référence à la Figure 2, l'installation de traitement 1 comprend :

  • une unité de prétraitement 13 des eaux résiduaires 4 agencée pour fournir un effluent de prétraitement compatible avec les besoins d'une ou d'autres unités de l'installation et/ou avec les normes de rejets ; l'unité de prétraitement 13 des eaux résiduaires 4 comprend un ou plusieurs des traitements suivants:

    ▪ une unité de dégrillage et/ou une unité de tamisage agencées pour retirer de l'eau à traiter, par exemple à l'aide d'une grille, des objets insolubles et/ou macroscopiques tels que des branches ou des morceaux de plastique, et/ou
    ▪ une unité de dessablage agencée pour retirer, par exemple par décantation, le sable contenu dans de l'eau à traiter, et/ou
    ▪ une unité de dégraissage agencée pour retirer, par exemple par séparation chimique et/ou décantation, des huiles et/ou des graisses contenues dans de l'eau à traiter, et/ou

  • une unité de nitrification 12 comprise dans l'UTB pour améliorer l'élimination de l'azote contenu dans les eaux résiduaires 4 en produisant un effluent, contenant des nitrates et/ou des nitrites, destiné à être rejeté directement dans le milieu naturel ou /et à subir un traitement tertiaire complémentaire, et/ou
  • un digesteur 14 (ou unité de digestion 14) agencé pour produire du biogaz 15, par exemple du méthane, et du digestat 16 à partir de boues produites 7,8 par l'UTP 2 et/ou par l'UTB 3, et/ou
  • une unité, ou un poste, de relevage agencée pour relever, par exemple par pompage, des objets circulants dans l'installation 1, à titre d'exemple non limitatif des eaux, des boues et/ou du digestat, et/ou

- l'installation de traitement 1 comprend :

  • un dispositif (non représenté) pour alimenter l'UTP 2 en boues digérées 16 par l'unité de digestion 14 de l'installation 1, et/ou
  • un dispositif (non représenté) pour alimenter l"UTP 2 en mélange de boues biologiques 8 produites par l'UTB 3 et de boues primaires 7 produites par l'UTP 2, et/ou
  • un dispositif (non représenté) pour alimenter l'UTP 2 en un mélange de boues digérées et de boues primaires produites par l'UTP, et/ou
  • un dispositif (non représenté) pour alimenter l'UTP 2 en un mélange de boues digérées et de boues biologiques produites par l"UTB 3, et/ou
  • un dispositif agencé pour injecter et/ou doser un ou des agents de coagulation et/ou un ou des agents de floculation et/ou un ou des additifs colmatant/filtrant :

    ▪ dans l'UTP 2, et/ou
    ▪ dans l"UTB 3, et/ou
    ▪ dans les boues primaires 7 produites par l'UTP 2, et/ou
    ▪ dans les boues biologiques 8 produites par l'UTB 3, et/ou
    ▪ dans le mélange de boues biologiques 8 produites par l'UTB 3 et de boues primaires produites 7 par l'UTP 2, et/ou
    ▪ dans les boues 16 ayant été digérées par l'unité de digestion 14, et/ou
    ▪ dans un mélange de boues digérées 16 et de boues primaires 7 produites par l'UTP 2, et/ou
    ▪ dans un mélange de boues digérées 16 et de boues biologiques 8 produites par l'UTB 3, et/ou
    ▪ dans le carbone organique produit par l'installation 1, et/ou

- le ou les paramètres de fonctionnement de l'UTP 2 comprennent :

  • un débit d'eau à traiter 6,61 par l'UTB 3, et/ou
  • une modification, par un dispositif d'injection, d'une ou de quantités injectées et/ou une modification d'un ou de débits d'injection en agent(s) de coagulation et/ou en agent(s) de floculation et/ou en additif(s) colmatant/filtrant :

    ▪ dans l'UTP 2, et/ou
    ▪ dans l"UTB 3, et/ou
    ▪ dans les boues primaires 7 produites par l'UTP 2, et/ou

- dans les boues biologiques 8 produites par l'UTB 3, et/ou
- dans le mélange de boues biologiques 8 produites par l'UTB 3 et de boues primaires 7 produites par l'UTP 2, et/ou
- dans les boues 16 ayant été digérées par l'unité de digestion 14, et/ou
- dans un mélange de boues digérées 16 et de boues primaires 7 produites par l'UTP 2, et/ou
- dans un mélange de boues digérées 16 et de boues biologiques 8 produites par l'UTB 3, et/ou
- dans le carbone organique produit par l'installation 1, et/ou

- un débit d'alimentation de l'UTP 2 en boues digérées 16 par l'unité de digestion 14, et/ou
- un débit d'alimentation de l'UTP 2 en mélange de boues biologiques 8 produites par l'UTB 3 et de boues primaires 7 produites par l'UTP 2, et/ou
- un débit d'alimentation de l'UTP 2 en un mélange de boues digérées 16 et de boues primaires 7 produites par l'UTP 2, et/ou
- un débit d'alimentation de l'UTP 2 en un mélange de boues digérées 16 et de boues biologiques 8 produites par l'UTB 3, et/ou

- le ou les capteurs de l'installation peuvent être des sondes et/ou des électrodes et/ou des analyseurs et/ou des spectromètres et/ou des spectroscopes et/ou des fluoromètres agencés pour réaliser :

- des mesures de spectroscopie UV, et/ou
- des mesures de fluorescence 3D, et/ou
- des analyses de Carbone Organique Total en ligne ou de Demande Chimique en Oxygène en ligne, par exemple via un capteur COTmètre ou respectivement un DCOmètre, et/ou
- des analyses d'Acides Gras Volatils, et/ou
- des mesures de respiromèêtrie en ligne, et/ou
- des mesures de Matières En Suspension (MES), et/ou
- des mesures de Demande Biochimique en Oxygène en ligne, par exemple via un DBOmètre, et/ou
- des analyses et/ou des mesures d'azote Kjeldahl et/ou d'azote total et/ou d'ions ammonium et/ou d'ammoniaque et/ou de nitrates et/ou de nitrites en ligne ou au laboratoire, et/ou
- des analyses de phosphore total et/ou de phosphates en ligne ou au laboratoire, et/ou
- des mesures en oxygène dissous en ligne, et/ou

- à titre d'exemple non limitatif, la fonction f(C,N), et par analogie f(C,P), est une des fonctions ou une combinaison, tel qu'un ratio, un produit, une différence ou une somme, des fonctions ou une composition des fonctions suivantes :

- N/C, ou
- ln(C)-ln(N) ou log(C)-log(N), où ln est la fonction logarithme népérien et log le logarithme décimal, ou
- $10^{C/N}$ ou $10^{N/C}$ ou $10^{C-N}$ ou $10^{N-C}$, ou
- $a^{C/N}$ ou $a^{N/C}$ ou $a^C.b^{1/N}$ ou $a^C.b^N$ ou $a^N.b^{1/C}$ ou $a^{1/C}.b^{1/N}$ ou $a^C/b^N$ ou $a^{1/C}/b^N$ ou $a^C/b^{1/N}$ ou $a^{1/C}/b^{1/N}$ ou $a^N/b^C$ ou $a^{1/N}/b^C$ ou $a^N/b^{1/C}$ ou $1/a^C.b^N$ ou $1/a^C.b^{1/N}$ ou $1/a^N.b^{1/C}$ ou $1/a^{1/C}.b^{1/N}$, où a et b sont des nombres réels entiers ou non, ou
- exp(C/N) ou exp(C)/N ou C/exp(N) ou exp(N/C) ou exp(N)/C ou N/exp(C), où exp est la fonction exponentielle, ou

- $\sqrt{(C)}/N$ ou $\sqrt{(N)}/C$ ou $\sqrt{\left(\frac{C}{N}\right)}$ ou

$C/\sqrt{(N)}$ ou $N/\sqrt{(C)}$.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Installation de traitement (1) d'eaux résiduaires (4) comprenant :

- une Unité de Traitement Primaire (UTP) (2) agencée pour produire un effluent déchargé, au moins en partie, de matières en suspension contenues dans de l'eau à traiter par l'UTP,
- une Unité de Traitement Biologique (UTB) (3) agencée pour éliminer au moins en partie, du carbone organique contenu dans de l'eau à traiter par l'UTB, au moins une partie de l'eau à traiter par l'UTB comprenant une partie de l'effluent de l'UTP,
- une unité de commande configurée pour :

• déterminer un ratio, dit C/N, entre une quantité de carbone organique contenue dans de l'eau à traiter (5,52) par l'UTB et/ou dans de l'eau en traitement (5,53) dans l'UTB et une quantité d'azote total ou partiel contenue dans de l'eau à traiter par l'UTB et/ou dans de l'eau en traitement dans l'UTB, et/ou
• déterminer un ratio, dit C/P, entre une quantité de carbone organique contenue dans de l'eau à traiter par l'UTB et/ou dans de l'eau en traitement dans l'UTB et une quantité de phosphore total ou partiel contenu dans de l'eau à traiter par l'UTB et/ou dans de l'eau en traitement dans l'UTB,

• lorsque de l'eau à traiter par l'UTB présente un ratio C/N, et/ou respectivement un ratio C/P, supérieur à une première consigne, et/ou respectivement à une deuxième consigne, commander un ou des paramètres de fonctionnement de l'UTP de sorte à minimiser un écart entre le ratio C/N et la première consigne, et/ou respectivement pour minimiser un écart entre le ratio C/P et la deuxième consigne, et à réguler, au cours du temps et en temps réel, la quantité de carbone organique contenue dans de l'eau à traiter par l'UTB pour que l'UTB soit alimentée avec une eau comprenant une quantité de carbone organique égale à la quantité de carbone organique nécessaire pour éliminer l'azote et/ou le phosphore contenu dans ladite eau alimentant l'UTB,

l'unité de commande étant configurée pour rétroagir sur et/ou modifier le ou les paramètres de fonctionnement de l'UTP(2) proportionnellement à l'écart entre le ratio C/N et la première consigne et/ou respectivement à l'écart entre le ratio C/P et la deuxième consigne, l'installation comprenant au moins deux capteurs (9,10) agencés pour mesurer dans de l'eau à traiter (5,52) par l'UTB (3) et/ou dans de l'eau en traitement (5,53) dans l'UTB :

- la quantité de carbone organique et/ou la quantité d'azote total ou partiel et/ou la quantité de phosphore total ou partiel, et/ou
- un ou des paramètres chimiques à partir desquels sont calculés et/ou déterminés la quantité de carbone organique et/ou la quantité d'azote total ou partiel et/ou la quantité de phosphore total ou partiel, et/ou
- une quantité d'oxygène,

dans laquelle :

- le ou les paramètres chimiques à partir desquels la quantité de carbone organique est calculée et/ou déterminée sont une Demande Chimique en Oxygène (DCO) et/ou une Demande Biochimique en Oxygène (DBO) et/ou un carbone organique total et/ou un carbone organique dissous et/ou de la matière en suspension (MES), et/ou
- le ou les paramètres chimiques à partir desquels la quantité d'azote total ou partiel est calculée et/ou déterminée sont une concentration en azote total et/ou en azote total Kjeldahl et/ou en nitrates et/ou en nitrites et/ou en ammonium et/ou en ammoniac dissous et/ou de la matière en suspension (MES), et/ou
- le ou les paramètres chimiques à partir desquels la quantité de phosphore total ou partiel est calculée et/ou déterminée sont une concentration en phosphore total et/ou en phosphate et/ou en hydrogénophosphate et/ou en di-hydrogénophosphate et/ou en acide phosphorique et/ou de la matière en suspension (MES).

2. Installation (1) selon la revendication 1, comprenant, en outre :

- un dispositif agencé pour faire recirculer l'eau en traitement (5,53) dans l'UTB, et/ou
- un dispositif (101) agencé pour alimenter l'UTP en boues primaires (7) produites par l'UTP, et/ou
- un dispositif (103,105) agencé pour alimenter l'UTP en carbone organique provenant de la fermentation des boues primaires, et/ou
- un dispositif (104) agencé pour injecter et/ou doser un ou des agents de coagulation et/ou un ou des agents de floculation et/ou un ou des additifs colmatant/filtrant dans l'UTP.

3. Installation (1) selon la revendication 1 ou 2, dans laquelle le ou les paramètres de fonctionnement de l'UTP (2) comprennent :

- un débit d'eau à traiter (5,51) par l'UTP, et/ou
- une ou des quantités injectées et/ou un ou des débits d'injection en agent(s) de coagulation et/ou en agent(s) de floculation et/ou en additif(s) colmatant/filtrant dans l'UTP, et/ou
- un débit d'alimentation de l'UTP (2) en boues primaires produites par l'UTP (2).

4. Installation (1) selon l'une quelconque des revendications précédentes, comprenant un digesteur (14) agencé pour produire du biogaz et du digestat à partir d'une quantité de carbone organique contenue dans de l'eau à traiter par l'UTP qui est en excès par rapport à la quantité de carbone organique nécessaire pour éliminer l'azote et/ou le phosphore contenu dans l'eau à traiter par l'UTB, l'unité de commande étant en outre configurée pour commander un ou plusieurs paramètres de fonctionnement du digesteur (14).

5. Procédé de régulation du fonctionnement d'une installation de traitement (1) d'eaux résiduaires (4) selon l'une quelconque des revendications précédentes, le procédé comprenant :

- une étape de détermination par l'unité de commande du ratio C/N, et/ou
- une étape de détermination par l'unité de commande du ratio C/P, et
- lorsque de l'eau à traiter par l'UTB présente un ratio C/N, et/ou respectivement un ratio C/P, supérieur à la première consigne, et/ou respectivement à la deuxième consigne, une étape de commande, par l'unité de commande, de l'un ou plusieurs paramètres de fonctionnement de l'UTP (2) de l'installation de sorte à minimiser l'écart entre le ratio C/N et la première consigne, et/ou respectivement pour minimiser l'écart entre le ratio C/P et la deuxième consigne, et à réguler, au cours du temps et en temps réel, la quantité de carbone organique contenue dans de l'eau à traiter par l'UTB pour que l'UTB soit alimentée avec une eau comprenant une quantité de carbone organique égale à la quantité de carbone organique nécessaire pour éliminer l'azote et/ou le phosphore contenus dans ladite eau alimentant l'UTB, au moins une partie de l'eau à traiter par l'UTB comprenant une partie de l'effluent de l'UTP, la ou les commandes étant choisies de manière à rétroagir sur et/ou modifier le ou les paramètres de fonctionnement de l'UTP(2) proportionnellement à l'écart entre le ratio C/N et la première consigne et/ou respectivement à l'écart entre le ratio C/P et la deuxième consigne.

**6.** Procédé selon la revendication 5, comprenant une mesure dans l'eau à traiter (5,52) par l'UTB (3) et/ou dans l'eau en traitement (5,53) dans l'UTB, par un ou plusieurs desdits capteurs (9,10) :

- de la quantité de carbone organique et/ou de la quantité d'azote total ou partiel et/ou de la quantité de phosphore total ou partiel, et/ou
- de l'un ou plusieurs paramètres chimiques à partir desquels sont calculés et/ou déterminés la quantité de carbone organique et/ou la quantité d'azote total ou partiel et/ou la quantité de phosphore total ou partiel.

**7.** Procédé selon la revendication 5 ou 6, dans lequel le ou les paramètres de fonctionnement de l'UTP comprennent :

- un débit d'alimentation de l'UTP en boues primaires (7) produites par l'UTP, et/ou
- un débit d'alimentation de l'UTP en carbone organique produit par l'installation provenant de la fermentation des boues primaires, et/ou
- un débit d'alimentation et/ou un dosage en agent(s) de coagulation et/ou en agent(s) de floculation et/ou en additif(s) colmatant/filtrant de l'UTP, et/ou
- un débit d'eau à traiter (5,51) par l'UTP, et/ou
- un débit d'alimentation de l'UTP en boues biologiques produites par l'UTB (3).

**Patentansprüche**

**1.** Behandlungsanlage (1) von Abwasser (4) umfassend:

- eine primäre Behandlungseinheit (UTP) (2), die ausgebildet ist, um ein Abwasser zu erzeugen, das zumindest teilweise von Schwebstoffen befreit ist, die in dem von der UTP zu behandelnden Wasser enthalten sind,
- eine biologische Behandlungseinheit (UTB) (3), die ausgebildet ist, um zumindest teilweise organischen Kohlenstoff zu entfernen, der in Wasser enthalten ist, das von der UTB behandelt werden soll, wobei zumindest ein Teil des Wassers, das von der UTB behandelt werden soll, einen Teil des Abwassers aus der UTP umfasst,
- eine Steuereinheit, die zu Folgendem konfiguriert ist:

• Bestimmen eines als C/N bezeichneten Verhältnisses zwischen einer Menge an organischem Kohlenstoff, die in dem von der UTB zu behandelnden Wasser (5,52) und/oder dem in der UTB behandelten Wasser (5,53) enthalten ist, und der Menge an Gesamt- oder Teilstickstoff, die in dem von der UTB zu behandelnden und/oder in dem in der UTB behandelten Wasser enthalten ist, und/oder
• Bestimmen eines als C/P bezeichneten Verhältnisses zwischen einer Menge an organischem Kohlenstoff, die in dem von der UTB zu behandelnden Wasser und/oder dem in der UTB behandelten Wasser enthalten ist, und einer Menge an Phosphor insgesamt oder teilweise, die in dem von der UTB zu behandelnden Wasser und/oder dem in der UTB behandelten Wasser enthalten ist,
• wenn das von der UTB zu behandelnde Wasser ein Verhältnis C/N und/oder ein Verhältnis C/P aufweist, das größer ist als ein erster Sollwert und/oder ein zweiter Sollwert Steuern eines oder mehrerer Betriebsparameter der UTP, um eine Abweichung zwischen dem Verhältnis C/N und dem ersten Sollwert und/oder zwischen dem Verhältnis C/P und dem zweiten Sollwert zu minimieren, und im Lauf der Zeit und in Echtzeit die Menge an organischem Kohlenstoff in dem zu behandelnden Wasser so zu regulieren, damit die UTB mit Wasser versorgt wird, umfassend eine Menge an organischem Kohlenstoff, die gleich wie die Menge an organischem Kohlenstoff ist, die erforderlich ist, um den Stickstoff und/oder Phosphor zu entfernen, der in dem Wasser enthalten ist, das der UTB zugeführt wird,

wobei die Steuereinheit konfiguriert ist, um auf den oder die Betriebsparameter des UTP(2) zurückzuwirken und/oder diese zu ändern, proportional zu
der Abweichung zwischen dem Verhältnis C/N und dem ersten Sollwert und/oder der Abweichung zwischen dem Verhältnis C/P und dem zweiten Sollwert,
die Installation umfassend mindestens zwei Sensoren (9,10), die die ausgebildet sind, um in von der UTB (3) zu behandelndem Wasser (5,52), und/oder in von der UTB behandeltem Wasser (5,53) Folgendes zu messen:

- die Menge an organischem Kohlenstoff und/oder die Menge an Stickstoff insgesamt oder teilweise und/oder die Menge an Phosphor insgesamt oder teilweise, und/oder
- einen oder mehrere chemische Parameter, anhand derer die Menge an organischem Kohlenstoff, die Menge an Stickstoff insgesamt oder teilweise und/oder die Menge an Phosphor insgesamt oder teilweise berechnet und/oder bestimmt werden, und/oder
- eine Sauerstoffmenge,

wobei:

- der oder die chemischen Parameter, anhand derer die Menge an organischem Kohlenstoff berechnet und/oder bestimmt wird, ein chemischer Sauerstoffbedarf (CSB) und/oder ein biochemischer Sauerstoffbedarf (BSB) und/oder ein organischer Kohlenstoff insgesamt und/oder ein gelöster organischer Kohlenstoff und/oder Schwebstoffe (SSM) sind, und/oder
- der oder die chemischen Parameter, anhand derer die Stickstoffmenge insgesamt oder teilweise berechnet und/oder bestimmt wird, eine Konzentration von Stickstoff insgesamt und/oder Kjeldahl-Stickstoff insgesamt und/oder Nitraten und/oder Nitriten und/oder Ammonium und/oder gelöstem Ammoniak und/oder Schwebstoffen (SSM) sind, und/oder
- der oder die chemischen Parameter, anhand derer die Phosphormenge insgesamt oder teilweise berechnet und/oder bestimmt wird, eine Konzentration an Phosphor insgesamt, und/oder Phosphat, und/oder Hydrogenphosphat, und/oder Dihydrogenphosphat, und/oder Phosphorsäure und/oder die Schwebstoffe (SSM) sind.

2. Anlage (1) nach Anspruch 1, ferner umfassend:

- eine Vorrichtung, die ausgebildet ist, um das in der UTB zu behandelnde Wasser (5,53) umzuwälzen, und/oder
- eine Vorrichtung (101), die ausgebildet ist, um der UTP den von der UTP erzeugten Primärschlamm (7) zuzuführen, und/oder
- eine Vorrichtung (103,105), die die ausgebildet ist, um der UTP organischen Kohlenstoff aus der Fermentation des Primärschlamms zuzuführen, und/oder
- eine Vorrichtung (104), die die ausgebildet ist, um ein oder mehrere Koagulationsmittel und/oder ein oder mehrere Flockungsmittel und/oder ein oder mehrere verstopfende/filternde Zusätze in das UTP einzuleiten und/oder zu dosieren.

3. Anlage (1) nach Anspruch 1 oder 2, wobei der oder die Betriebsparameter der UTP (2) Folgendes umfassen:

- eine Menge an von der UTP zu behandelndem Wasser (5,51), und/oder
- eine oder mehrere eingeleitete Mengen und/oder eine oder mehrere Einleitraten als Koagulationsmittel und/oder als Flockungsmittel und/oder als kolmende/filtrierende Zusatzstoffe in der UTP, und/oder
- eine Beschickungsmenge der UTP (2) mit Primärschlamm, der von der UTP (2) erzeugt wird.

4. Anlage (1) nach einem der vorherigen Ansprüche, umfassend einen Fermenter (14), der ausgebildet ist, um Biogas und Digestat aus einer Menge an organischem Kohlenstoff zu erzeugen, die in dem von der UTP zu behandelnden Wasser enthalten ist, die im Überschuss zu der Menge an organischem Kohlenstoff ist, die erforderlich ist, um den Stickstoff und/oder Phosphor zu entfernen, der in dem durch die UTB zu behandelnden Wasser enthalten ist, wobei die Steuereinheit ferner konfiguriert ist, um einen oder mehrere Betriebsparameter des Fermenters (14) zu steuern.

5. Verfahren zur Regulierung des Betriebs einer Behandlungsanlage (1) von Abwasser (4) nach einem der vorherigen Ansprüche, das Verfahren umfassend:

- einen Schritt eines Bestimmens des Verhältnisses C/N durch die Steuereinheit, und/oder
- einen Schritt eines Bestimmens des Verhältnisses C/P durch die Steuereinheit, und
- wenn das von der UTB zu behandelnde Wasser ein Verhältnis C/N und/oder ein Verhältnis C/P aufweist, das größer ist als der erste Sollwert und/oder der zweite Sollwert, einen Steuerungsschritt, durch die Steuereinheit, des einen oder der mehreren Betriebsparameter der UTP (2) der Anlage, um die Abweichung zwischen dem Verhältnis C/N und dem ersten Sollwert und/oder die Abweichung zwischen dem Verhältnis C/P und dem zweiten Sollwert zu minimieren, und im Lauf der Zeit und in Echtzeit die Menge an organischem Kohlenstoff in dem zu behandelnden Wasser so zu regulieren, damit die UTB mit Wasser versorgt wird, umfassend eine Menge an organischem Kohlenstoff, die gleich wie die Menge an organischem Kohlenstoff ist, die erforderlich ist, um den Stickstoff und/oder Phosphor zu entfernen, der in dem Wasser enthalten ist, das der UTB zugeführt wird, mindestens ein Teil des von der UTB zu behandelnden Wassers umfassend einen Teil des Abwassers der UTP umfasst, wobei die Steuerung(en) gewählt ist (sind), um auf den oder die Betriebsparameter der UTP (2) proportional zu der Abweichung zwischen dem Verhältnis C/N und dem ersten Sollwert und/oder jeweils zu der Abweichung zwischen dem Verhältnis C/P und dem zweiten Sollwert zurückzuwirken und/oder diese zu ändern.

**6.** Verfahren nach Anspruch 5, umfassend eine Messung in dem zu behandelnden Wasser (5,52) durch die UTB (3) und/oder in dem in der UTB behandelten (5,53) durch einen oder mehrere der Sensoren (9,10):

- der Menge an organischem Kohlenstoff und/oder der Menge an Stickstoff insgesamt oder teilweise und/oder der Menge an Phosphor insgesamt oder teilweise, und/oder
- eines oder mehrerer chemischer Parameter, anhand derer die Menge an organischem Kohlenstoff, die Menge an Stickstoff insgesamt oder teilweise und/oder die Menge an Phosphor insgesamt oder teilweise berechnet und/oder bestimmt werden.

**7.** Verfahren nach Anspruch 5 oder 6, wobei die Betriebsparameter der UTP Folgendes umfassen:

- eine Beschickungsmenge der UTP mit Primärschlamm (7), der von der UTP erzeugt wird, und/oder
- eine Beschickungsmenge der UTP mit durch die Anlage erzeugtem organischen Kohlenstoff aus der Fermentation des Primärschlamms, und/oder
- eine Beschickungsmenge und/oder Dosierung von Koagulations- und/oder Flockungsmitteln und/oder von verstopfenden/filtrierenden Zusatzstoffen der UTP, und/oder
- eine Menge an von der UTP zu behandelndem Wasser (5,51), und/oder
- eine Beschickungsmenge der UTP mit biologischem Schlamm, der von der UTB (3) erzeugt wird.

## Claims

**1.** A facility (1) for treatment of waste water (4) including:

- a Primary Treatment Unit (PTU) (2) adapted to produce an effluent discharged at least in part of materials in suspension contained in the water to be treated by the PTU,
- a Biological Treatment Unit (BTU) (3) adapted to eliminate at least in part organic carbon contained in the water to be treated by the BTU, at least part of the water to be treated by the BTU comprising part of the effluent from the PTU,
- a control unit configured:

• to determine a ratio C/N between a quantity of organic carbon contained in the water (5,52) to be treated by the BTU and/or in the water (5,53) being treated in the BTU and a quantity of total or partial nitrogen contained in the water to be treated by the BTU and/or in the water being treated in the BTU, and/or
• to determine a ratio C/P between a quantity of organic carbon contained in the water to be treated by the BTU and/or in the water being treated in the BTU and a quantity of total or partial phosphorus contained in the water to be treated by the BTU and/or in the water being treated in the BTU,
• if the water to be treated by the BTU has a ratio C/N and/or respectively a ratio C/P greater than a first set point and/or respectively a second set point, to control one or more operating parameters of the PTU so as to minimize a difference between the ratio C/N and the first set point and/or respectively to minimize a difference between the ratio C/P and the second set point, and to regulate over time and in real time the quantity of organic carbon contained in the water to be treated by the BTU so that the BTU is fed with water containing a quantity of organic carbon equal to the quantity of organic carbon necessary to eliminate the nitrogen and/or the phosphorus contained in the water feeding the BTU,

the control unit being configured to act retrospectively on and/or to modify the operating parameter or parameters of the PTU(2) in proportion to the difference between the ratio C/N and the first set point and/or respectively to the difference between the ratio C/P and the second set point,
the facility including at least two sensors (9,10) adapted to measure in the water (5,52) to be treated by the BTU (3) and/or in the water (5,53) being treated in the BTU:

- the quantity of organic carbon and/or the quantity of total or partial nitrogen and/or the quantity of total or partial phosphorus, and/or
- one or more chemical parameters from which is or are calculated and/or determined the quantity of organic carbon and/or the quantity of total or partial nitrogen and/or the quantity of total or partial phosphorus, and/or
- a quantity of oxygen,

in which:
the chemical parameter or parameters on the basis of which the quantity of organic carbon is calculated and/or determined is or are a Chemical Oxygen Demand (COD) and/or a Biochemical Oxygen Demand (BOD) and/or a total organic carbon and/or a dissolved organic carbon and/or material in suspension (MIS), and/or

- the chemical parameter or parameters on the basis of which the quantity of total or partial nitrogen is calculated and/or determined is or are a total nitrogen and/or Kjeldahl total nitrogen and/or nitrates and/or nitrites and/or ammonium and/or dissolved ammonia and/or material in suspension (MIS) concentration, and/or
- the chemical parameter or parameters on the basis of which the quantity of total or partial phosphorus is calculated and/or determined is or are a total phosphorus and/or phosphate and/or hydrogen phosphate and/or dihydrogen phosphate and/or phosphoric acid and/or material in suspension (MIS) concentration.

2. The facility (1) as claimed in claim 1, further including:

- a device adapted to cause the water (5,53) being treated in the BTU to be recirculated, and/or

- a device (101) adapted to feed the PTU with primary slurry (7) produced by the PTU, and/or
- a device (103,105) adapted to feed the PTU with organic carbon resulting from fermentation of primary slurry, and/or
- a device (104) adapted to inject and/or to dose into the PTU one or more coagulation agents and/or one or more flocculation agents and/or one or more clogging/filtering additives.

3. The facility (1) as claimed in claim 1 or claim 2, in which the operating parameter or parameters of the PTU (2) include:

- a flow rate of the water (5,51) to be treated by the PTU, and/or
- one or more injected quantities and/or one or more injection flow rates of coagulation agent(s) and/or flocculation agent(s) and/or clogging/filtering additive(s) into the PTU, and/or
- a flow rate of feeding the PTU (2) with primary slurry produced by the PTU (2).

4. The facility (1) as claimed in any one of the preceding claims, including a digester (14) adapted to produce biogas and digestate from a quantity of organic carbon contained in the water to be treated by the PTU that is in excess relative to the quantity of organic carbon necessary to eliminate the nitrogen and/or the phosphorus contained in the water to be treated by the BTU, the control unit being further configured to control one or more operating parameters of the digester (14).

5. A method of regulating the operation of a facility (1) for treating waste water (4) according to any of the preceding claims, the method including:

- a step of determination, by the control unit, of the ratio C/N, and/or
- a step of determination, by the control unit, of the ratio C/P, and
- if the water to be treated by the BTU has a ratio C/N and/or respectively a ratio C/P greater than the first set point and/or respectively than the second set point, a control step, by the control unit, of the one or more operating parameters of the PTU (2) of the facility so as to minimize the difference between the ratio C/N and the first set point and/or respectively to minimize the difference between the ratio C/P and the second set point, and to regulate over time and in real time the quantity of organic carbon contained in the water to be treated by the BTU so that the BTU is fed with water containing a quantity of organic carbon equal to the quantity of organic carbon necessary to eliminate the nitrogen and/or the phosphorus contained in said water feeding by the BTU, at least part of the water to be treated by the BTU comprising part of the effluent from the PTU, the control or controls being chosen so as to act retrospectively on and/or to modify the operating parameter or parameters of the PTU(2) proportionally to the difference between the C/N ratio and the first setpoint and/or respectively to the difference between the C/P ratio and the second setpoint.

6. The method as claimed in claim 5, including measurement, by one or more of said sensors (9,10), in the water (5,52) to be treated by the BTU (3) and/or in the water (5,53) being treated in the BTU of:

- the quantity of organic carbon and/or the quantity of total or partial nitrogen and/or the quantity of total or partial phosphorus, and/or
- the one or more chemical parameters on the basis of which is or are calculated and/or determined the quantity of organic carbon and/or the quantity of total or partial nitrogen and/or the quantity of total or partial phosphorus.

7. The method as claimed in claim 5 or 6, in which the operating parameter or parameters of the PTU (2) comprise:

- a flow rate of feeding the PTU with primary slurry produced by the PTU (2), and/or
- a flow rate of feeding the PTU with organic carbon produced by the facility resulting from fermentation of primary slurry, and/or
- a flow rate of feeding and/or dosing the PTU with coagulation agent(s) and/or flocculation agent(s) and/or clogging/filtering additive(s), and/or
- a flow rate of water (5,51) to be treated by the PTU, and/or
- a flow rate of feeding the PTU with biological slurry produced by the BTU (3).

FIGURE 1

FIGURE 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014102686 A
- JP 2016168571 A
- US 2019127246 A
- CN 105621792

**Littérature non-brevet citée dans la description**

- **ASSMAN et al.** *Drinking Water Engineering and Science*, 2017, vol. 10, 61-68
- **QIBIN WANG** ; **QIUWEN CHEN** ; **JINFENG MA** ; **QIANG XU et al.** Application Of Real-Time Control Strategy To Improve Nitrogen Removal In Wastewater Treatment. *International Conference on Hydroinformatics HIC*, 2014
- **H. LONG** ; **E. BROEDERS** ; **H.W.H. MENKVELD**. Applying real-time pollution control to reduce chemical costs and energy usage for DAF. *Weftec conference*, 2016